# EUROPÄISCHE PATENTSCHRIFT

(11) **EP 1 187 792 B1**
(45) Veröffentlichungstag und Bekanntmachung des Hinweises auf die Patenterteilung: **29.10.2003**
(21) Anmeldenummer: 01938104.5
(22) Anmeldetag: 11.04.2001
(51) Int. Cl.: C03B 37/014, C03B 19/14, F27D 3/00

(54) **VORRICHTUNG ZUM SINTERN EINES FORMKÖRPERS**
DEVICE FOR SINTERING A SHAPED BODY
DISPOSITIF DE FRITTAGE D'UN CORPS MOULE

(30) Priorität: 22.04.2000 DE 10020033
(43) Veröffentlichungstag der Anmeldung: 20.03.2002
(73) Patentinhaber: Heraeus Tenevo AG, 63450 Hanau (DE)
(72) Erfinder: CHRISTIANSEN, Uwe, 63571 Gelnhausen (DE)
(86) Internationale Anmeldenummer: EP0104139
(87) Internationale Veröffentlichungsnummer: WO01081257

(56) Entgegenhaltungen:
- DE-C- 3 711 281
- PATENT ABSTRACTS OF JAPAN vol. 17, no. 73, 15. Februar 1993 (1993-02-15) & JP 04 275935 A (FURUKAWA ELECTRIC CO LTD), 1. Oktober 1992 (1992-10-01)
- PATENT ABSTRACTS OF JAPAN vol. 17, no. 73, 15. Februar 1993 (1993-02-15) & JP 04 275936 A (FURUKAWA ELECTRIC CO LTD), 1. Oktober 1992 (1992-10-01)
- PATENT ABSTRACTS OF JAPAN vol. 11, no. 141, 8. Mai 1987 (1987-05-08) & JP 61 281038 A (OCEAN CABLE CO LTD), 11. Dezember 1986 (1986-12-11)
- PATENT ABSTRACTS OF JAPAN vol. 18, no. 456, 25. August 1994 (1994-08-25) & JP 06 144841 A (FURUKAWA ELECTRIC CO LTD), 24. Mai 1994 (1994-05-24)
- PATENT ABSTRACTS OF JAPAN vol. 16, no. 13, 14. Januar 1992 (1992-01-14) & JP 03 232733 A (SHIN ETSU CHEM CO LTD), 16. Oktober 1991 (1991-10-16)

## Beschreibung

Die Erfindung betrifft eine Vorrichtung zum Sintem eines Formkörpers, insbesondere aus Siliciumdioxid-Soot in einer gasdichten Kammer, wobei die Vorrichtung zur vertikalen Zuführung des Formkörpers in eine Erhitzungszone mit einem in einen Innenraum der Kammer durch eine Durchführung hineinreichenden Hubmittel ausgestattet ist, welches durch einen außerhalb der Kammer angeordneten Antrieb bewegbar ist.

Die Herstellung von Vorformen für optische Fasem oder für die Halbleitertechnik erfolgt häufig über ein Zwischenprodukt, wobei der Formkörper aus Siliciumdioxid als ein sogenannter Sootkörper vorliegt. Zum Sintem wird der Formkörper der Erhitzungszone eines Zonenschmelzofens zugeführt, in welcher der Formkörper auf seine Erweichungstemperatur erwärmt und so die Umwandlung eingeleitet wird. Aufgrund der hohen Qualitätsanforderungen vor allem im Hinblick auf Einsatzzwecke in der Nachrichten- und Halbleitertechnik erfolgt der Sinterprozeß in der gasdichten Kammer, um so Verunreinigungen zuverlässig ausschließen zu können.

Als Hubmittel werden dabei gewöhnlich axial verfahrbare Säulen verwendet, an denen der Formkörper stehend oder hängend fixiert ist. Eine solche hängende Anordnung ist beispielsweise durch die EP-A 0 416 614, die EP-A 0 529 694 sowie die EP-A 0 547 560 bekannt, bei denen der poröse Formkörper an einer vertikal- und rotationsbeweglichen Säule hängend befestigt ist und so innerhalb der mit einem reaktionsarmen Gas gefüllten Kammer der Erhitzungszone zuführbar ist. In ähnlicher Weise ist gemäß der US 5 032 079 der poröse Formkörper hängend in der mit einem Inertgas, beispielsweise Stickstoff oder Helium, gefüllten Kammer an der vertikal- und drehbeweglichen Säule fixiert. Andere Anordnungen sind beispielsweise durch die JP-A-61 281 038 und die JP-A-03 232 733 bekannt.

Ebenso zeigt die WO 93/23 341 A1 eine Vorrichtung zum Sintern, in deren mit Umgebungsdruck oder Vakuum betreibbarer Kammer der Formkörper an der vertikal beweglichen und um ihre Achse drehbaren Säule hängend angeordnet ist.

Zur Abdichtung der Säule gegenüber dem Innenraum der Kammer ist die Durchführung nach dem Stand der Technik mit einer Dichtung versehen, die einerseits eine zuverlässige Abdichtung ermöglicht, andererseits aber auch unempfindlich gegenüber den hohen während des Sinterprozesses auftretenden Temperaturen ist. Nachteilig wirkt sich bei dem beschriebenen Stand der Technik aus, daß die Dichtung in der Praxis häufig einem erheblichen Verschleiß unterliegt wodurch die Dichtungswirkung schnell nachläßt, was immer auch mit einer verminderten Qualität des Formkörpers nach Abschluß des Sinterprozesses verbunden ist.

Als problematisch erweist sich dabei vor allem, daß während des Sinterprozesses geringe Mengen an Cl₂ freigesetzt werden und nach dem Öffnen der Kammer zum Entnehmen des Formkörpers diese mit der Umgebungsfeuchtigkeit zu HCI reagiert, wodurch die Oberfläche der Säule angegriffen wird. Die dadurch verursachte erhöhte Rauhigkeit der Oberfläche führt bei der Bewegung der Säule zur Beschädigung der Dichtung. Die Bauelemente des Hubmittels erfordern daher einen erheblichen Wartungs- und Pflegeaufwand und müssen regelmäßig behandelt oder ausgetauscht werden, was zu einer geringeren Verfügbarkeit der Vorrichtung führt. Wird hingegen eine Beschädigung der Dichtung nicht rechtzeitig erkannt, so kann das in der Dichtung vorhandene Dichtungsöl in den Innenraum der Kammer gelangen und verdampft dort unter dem Einfluß der hohen Temperaturen. Dies führt dort zu Verunreinigungen, die an dem Endprodukt nachweisbar sind.

Weiterhin bilden sich auf der Oberfläche des in den Innenraum der Kammer hineinreichenden Abschnitts der Säule Ablagerungen, insbesondere aus SiO₂, die regelmäßig entfernt werden müssen, um Beschädigungen und damit Undichtigkeiten der Durchführung zu vermeiden.

Die genannten Probleme treten dabei bei der hängenden Anordnung, bei der sich die Durchführung oberhalb des Formkörpers befindet und daher das Dichtungsöl unter dem Einfluß der Schwerkraft leicht in den Innenraum der Kammer gelangen kann, vermehrt auf, lassen sich allerdings auch bei einer stehenden Anordnung der Hubsäule nicht vermeiden, weil durch die relative axiale Bewegung zwischen der Hubsäule und der Durchführung selbst bei geringfügigen Schäden an der Dichtung unzulässige Mengen des Dichtungsöles in den Innenraum der Kammer gelangen und später an dem Formkörper nachweisbar sind.

Vor diesem Hintergrund liegt der Erfindung die Aufgabe zugrunde, eine Vorrichtung der beschriebenen Art mit einem außerhalb der Kammer angeordneten Antrieb für das im Innenraum der Kammer angeordnete Hubmittel derart auszuführen, daß hierbei die Verfügbarkeit der Vorrichtung und die Qualität des im Sinterprozeß hergestellten Formkörpers verbessert wird, wobei insbesondere Verunreinigungen aufgrund von Undichtigkeiten der Durchführung weitgehend ausgeschlossen werden sollen. Dabei soll zugleich der Wartungsaufwand reduziert werden.

Diese Aufgabe wird gelöst mit einer Vorrichtung gemäß den Merkmalen des Patentanspruchs 1. Die Unteransprüche betreffen besonders zweckmäßige Weiterbildungen der Erfindung.

Erfindungsgemäß ist also eine Vorrichtung vorgesehen, bei der das Hubmittel eine durch die Durchführung in den Innenraum der Kammer hineinreichende und mit dem Antrieb verbundene Antriebswelle aufweist. Durch diese ausschließlich drehbewegliche Antriebswelle können Beschädigungen der Durchführung weitgehend ausgeschlossen werden. Der in den Innenraum der Kammer hineinreichende Abschnitt der Antriebswelle gelangt nicht in den Bereich der Durchführung, so daß Veränderungen der Oberflächenbeschaffenheit der Antriebswelle, beispielsweise durch Ablagerungen auf der Antriebswelle, nicht in Kontakt mit der Dichtung kommen können und daher keinen nachteiligen Einfluß auf die Funktionstüchtigkeit der Dichtung haben. Die Verfügbarkeit der Vorrichtung wird dabei insbesondere durch den verminderten Wartungsaufwand verbessert. Zugleich kann ein mit Dichtungsöl behafteter Abschnitt der Antriebswelle nicht in den Innenraum der Kammer gelangen, so daß eine Verunreinigung des Formkörpers während des Sinterprozesses durch verdampfendes Dichtungsöl ausgeschlossen ist. Daher können die an sich bekannten Dichtungen mit einer Füllung von Dichtungsöl weiterhin verwendet werden, wodurch der Herstellungsaufwand der Vorrichtung vergleichsweise gering gehalten und eine Umrüstung vorhandener Anlagen, deren Säule als Antriebswelle Verwendung finden, ermöglicht wird. Die Antriebswelle, die hierzu beispielsweise mit einem Gewindeabschnitt, einem Ritzel oder einer Nocke versehen wird, wirkt dabei mit einem Bauelement des Hubmittels im Innenraum der Kammer zusammen.

Besonders vorteilhaft ist dabei eine Ausführungsform der erfindungsgemäßen Vorrichtung, bei der das Hubmittel im Bereich der Erhitzungszone eine aus einzelnen Gliedern zusammengesetzte Gliederkette hat. Die Glieder der Gliederkette können auch als Ösen ausgebildet sein und entsprechend eine Ösenkette bilden. Die Glieder- oder Ösenkette ermöglicht sowohl eine flexible Fixierung des Formkörpers in unterschiedlichen Positionen als auch eine problemlose Anpassung an unterschiedliche geometrische Abmessungen des Formkörpers. Durch Austausch oder Ergänzung der Glieder ist zudem eine Erhöhung der Belastbarkeit bei erhöhtem Gewicht des Formkörpers möglich, ohne daß hierzu aufwendige konstruktive Änderungen erforderlich sind. Der Formkörper wird dabei an der Glieder- oder Ösenkette hängend fixiert, wobei die Zuführung des Formkörpers zu einer Erhitzungszone beispielsweise durch Linearbewegen (Aufwicklen) der Gliederkette erfolgt.

Dabei ist eine Weiterbildung der Vorrichtung dadurch besonders zweckmäßig ausgestaltet, daß die Gliederkette an einer Umlenkfläche aus der vertikalen Zugrichtung umlenkbar ist. Hierdurch kann die Anordnung der Antriebswelle und der Durchführung in den Innenraum mit der entsprechenden Dichtung räumlich getrennt von der Erhitzungszone erfolgen, so daß die im Bereich der Durchführung auftretende Temperatur gegenüber der Sintertemperatur erheblich vermindert werden kann. Die Störanfälligkeit der Dichtung kann dadurch erheblich reduziert werden. Die Umlenkfläche kann dabei beispielsweise eine Gleitfläche aufweisen, so daß weitere bewegliche Bauelemente neben der Gliederkette entbehrlich sind.

Eine besonders zweckmäßige Abwandlung der Erfindung ist dann gegeben, wenn die Glieder der Gliederkette derart miteinander verbunden sind, daß eine Drehbeweglichkeit um die Achse der Haupterstreckung der Gliederkette im wesentlichen ausgeschlossen ist. Hierdurch wird eine unbeabsichtigte und unkontrollierte Drehbewegung des an der Gliederkette hängenden Formkörpers verhindert. Eine unerwünschte ungleichmäßige Erwärmung des Formkörpers in der Erhitzungszone und die dadurch verursachte eingeschränkte Qualität, insbesondere auch bei nicht rotationssymmetrischen Formkörpern, wird dadurch vermieden.

Besonders zweckmäßig ist hierbei auch eine Abwandlung der erfindungsgemäßen Vorrichtung, bei der die Glieder der Gliederkette jeweils einen Steg oder Ovalösen aufweisen, wobei die Stege oder Ovalösen durch eine Achse schwenkbar verbunden sind. Hierdurch wird zugleich eine mechanisch hoch belastbare Verbindung der einzelnen Glieder erreicht und eine Rotation um die Zugachse ausgeschlossen. Dabei werden die Abmessungen der Stege oder Ovalösen durch die Art des Antriebes und die gegebenenfalls vorhandene Umlenkung der Gliederkette bestimmt.

Als vorteilhaft hat sich auch eine Weiterbildung der Erfindung erwiesen, bei der die Gliederkette einzelne bei der Umlenkung jeweils auf der Umlenkfläche aufliegende Rollen aufweist. Die Rollen werden bei der Umlenkung auf der Umlenkfläche abgewälzt und vermindern so den Widerstand bei der Richtungsänderung der Glieder- oder Ösenkette. Zugleich werden dabei schädigende Einflüsse durch Verschleißerscheinungen oder Abrieb reduziert und die erforderliche Antriebsleistung verringert. Zudem können dabei mögliche auf die Glieder der Gliederkette wirkende Biegekräfte ausgeschlossen werden, so daß deren konstruktive Gestaltung im wesentlichen durch die zu erwartende Zugbelastung bestimmt wird. Die Glieder der Gliederkette können hierzu beispielsweise zwei parallele, die Rollen einschließende äußere Stege oder Ovalösen aufweisen oder auch außenseitig mit den Rollen ausgestattet sein.

Hierzu ist es besonders günstig, wenn die Höhe h der Stege oder der Ovalösen in ihren äußeren Abmessungen gegenüber dem Durchmesser der Rollen zurückgesetzt ist. Auf diese Weise kann ein Kontakt zwischen der Umlenkfläche und dem Steg wirksam verhindert werden, wobei die erforderliche Differenz zwischen den Abmessungen des Steges bzw. der Ovalöse und der Rolle insbesondere durch den Radius der Umlenkfläche und den Abstand aufeinander folgender Rollen bestimmt wird.

Eine andere besonders vorteilhafte Ausgestaltung der Erfindung ist hingegen auch dadurch gegeben, daß die Umlenkfläche eine für die Stege oder Ovalösen bestimmte Ausnehmung aufweist. Durch die Ausnehmungen wird ein ausreichender Freiraum erreicht, in den die Stege oder Ovalösen eingreifen können und dadurch eine Berührung zwischen der Umlenkfläche und dem Steg verhindert wird. Die Abmessungen der Glieder- oder Ösenkette können demnach unabhängig von der Umlenkung bestimmt werden, so daß eine wahlweise spätere Änderung der Gliederkettenführung problemlos möglich ist. Weiterhin verhindert die Vertiefung durch die in sie eingreifenden Stege ein seitliches Abgleiten sowie eine Abweichung von einem vorgegebenen Verlauf der Gliederkette.

Dabei ist es besonders sinnvoll, wenn die Umlenkfläche an einem Umlenkrad angeordnet ist, so daß der Reibungswiderstand weiter reduziert und zugleich auch sehr geringe Umlenkradien erreicht werden können. Das Umlenkrad kann dabei ähnlich einer Keilriemenscheibe mit seitlichen kegelförmigen Flanken oder Borden ausgestattet sein oder am Umfang angeordnete und der Beschaffenheit der Glieder angepasste Ausformungen aufweisen.

Eine andere, ebenfalls sehr empfehlenswerte Abwandlung der erfindungsgemäßen Vorrichtung ist dadurch gegeben, daß das Umlenkrad ein in die Rollen der Gliederkette formschlüssig eingreifendes Kettenrad hat. Neben einem seitlichen Abgleiten wird dadurch auch ein möglicher Schlupf der Gliederkette am Umfang des Umlenkrades vermieden. Durch die Erfassung der Drehwinkeländerung des Kettenrades kann so zugleich auch auf die vertikale Position der Gliederkette und somit auch des Formkörpers geschlossen werden. Zugleich wird dabei eine Übertragung von Biegekräften auf die durch Rollen miteinander verbundenen, parallelen Stege der Gliederkette, die hierbei jeweils an beiden Seiten des Kettenrades außenseitig entlang verlaufen, ausgeschlossen.

Hierbei wird eine einfache Ausgestaltung dann erreicht, wenn das Umlenkrad mittels der Antriebswelle antreibbar ist. Das Umlenkrad kann hierzu unmittelbar an der Antriebswelle fixiert werden und ermöglicht so eine problemlose vertikale Bewegung des Formkörpers. Dabei kann das dem Formkörper abgewandte Ende der Gliederkette frei herabhängen oder auch gegen eine Führung anliegen. Um ein gänzliches Auslaufen der Gliederkette zu verhindern kann ferner auch ein von den übrigen Gliedern abweichend geformtes Endglied vorgesehen werden.

Eine andere besonders zuverlässige Ausgestaltung der Erfindung wird dadurch erreicht, daß die Gliederkette durch ein Zugseil mit einer mittels der Antriebswelle antreibbaren Aufwickelspule verbunden ist. Das Zugseil ist dabei derart bemessen, daß es nicht in den frei hängenden Abschnitt oberhalb des Formkörpers gelangt. Daher befindet sich das Zugseil außerhalb des Einflußbereiches der Wärmestrahlung der Erhitzungszone, und zugleich wird eine unkontrollierte Drehbewegung des Formkörpers vermieden.

Besonders empfehlenswert ist dabei auch eine Abwandlung, bei der die Glieder der Gliederkette aus einem zugfesten und temperaturbeständigen Werkstoff hergestellt sind. Ein Ausgasen von Werkstoffbestandteilen der Gliederkette, die dadurch zu nachteiligen Veränderungen des Formkörpers führen können, wird so gering wie möglich gehalten.

Die Gliederkette könnte im wesentlichen keramische Werkstoffbestandteile aufweisen. Eine besonders günstige Ausführungsform wird jedoch dann erreicht, wenn die Glieder aus einem kohlefaserverstärkten Graphit-Werkstoff (sogenannter CFC Werkstoff - "carbon fiber reinforced carbon" - ) hergestellt sind. Dieser Werkstoff verbindet hohe Festigkeit und Temperaturbeständigkeit mit weitgehender chemischer Inertheit gegenüber Siliciumdioxid-Soot und Quarzglas. Die hohe Zugfestigkeit von kohlefaserverstärktem Graphit ermöglicht es, den Querschnitt der Glieder gering zu halten. Das geringe Gewicht der so geschaffenen Gliederkette erfordert zugleich nur eine vergleichsweise geringe Antriebsleistung.

Eine andere besonders sinnvolle Abwandlung der Vorrichtung wird dann erreicht, wenn eine Kraftmesseinrichtung zur Bestimmung einer auf das Hubmittel wirkenden Kraft vorgesehen ist. Hierdurch kann eine das zulässige Maß überschreitende Belastung der Gliederkette, wie sie beispielsweise bei einem Verklemmen des Formkörpers im Innenraum der Kammer auftreten kann, erfasst werden, um so einer Beschädigung der Vorrichtung bzw. des Formkörpers durch Abschalten des Antriebes zuvorzukommen. Ferner kann hierdurch das Erreichen einer oberen Endposition der Gliederkette erfasst werden.

Die Kraftmesseinrichtung könnte hierzu am Antrieb oder an der Antriebswelle angeordnet sein. Als besonders effektiv hat sich hingegen eine Weiterbildung erwiesen, bei der die Kraftmesseinrichtung einen zur Bestimmung der auf die Umlenkfläche wirkenden Kraft bestimmten Dehnungsmessstreifen aufweist. Der Dehnungsmessstreifen wird hierzu insbesondere im Bereich einer Halterung des die Umlenkfläche aufweisenden Umlenkrades, die unter Belastung beispielsweise einer Biegung ausgesetzt ist, angebracht. Der Dehnungsmessstreifen ist dabei nur moderaten Temperaturen ausgesetzt und ermöglicht so eine zuverlässige Erfassung der auftretenden Kräfte.

Eine andere vorteilhafte Weiterbildung wird dadurch erreicht, daß die Vorrichtung eine Führung für die Gliederkette hat, durch die eine Abweichung quer zur Zugrichtung der Gliederkette ausgeschlossen ist. Hierdurch wird eine Pendelbewegung der Gliederkette, die dadurch verursacht wird, daß die Gliederkette lediglich mit den Rollen auf der Umlenkfläche aufliegt und somit zwischen den Auflagepunkten der Rollen eine horizontale Verlagerung auftreten kann, vermieden. Der Abstand des an der Gliederkette hängenden Formkörpers gegenüber der Erhitzungszone kann dadurch konstant gehalten werden, so daß eine ungleichmäßige Erwärmung ausgeschlossen ist.

Vorteilhaft ist es auch, wenn die Vorrichtung einen Anschlag zur Begrenzung der vertikalen Hubbewegung hat. Eine Beschädigung des Formkörpers durch Berührung der Kammer oder von Bauteilen des Hubmittels werden daher zuverlässig ausgeschlossen.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig. 1: in einer geschnittenen Seitenansicht eine Vorrichtung zum Sintem eines Formkörpers, der hierzu an einer Gliederkette hängend fixiert ist,
- Fig. 2: eine vergrößerte perspektivische Ansicht eines Abschnitts der in Figur 1 dargestellten Gliederkette,
- Fig. 3: ein vergrößerte Darstellung der in Figur 1 gezeigten Gliederkette in einer quer zur Zugrichtung geschnittenen Ansicht,
- Fig. 4: eine vergrößerte Schnittdarstellung eines Umlenkrades der in Figur 1 gezeigten Vorrichtung,
- Fig. 5: eine gegenüber Figur 2 abgewandelte Ausführungsform einer Gliederkette in einer perspektivischen Darstellung,
- Fig. 6: die in Figur 5 gezeigte Gliederkette in einer geschnittenen Darstellung.

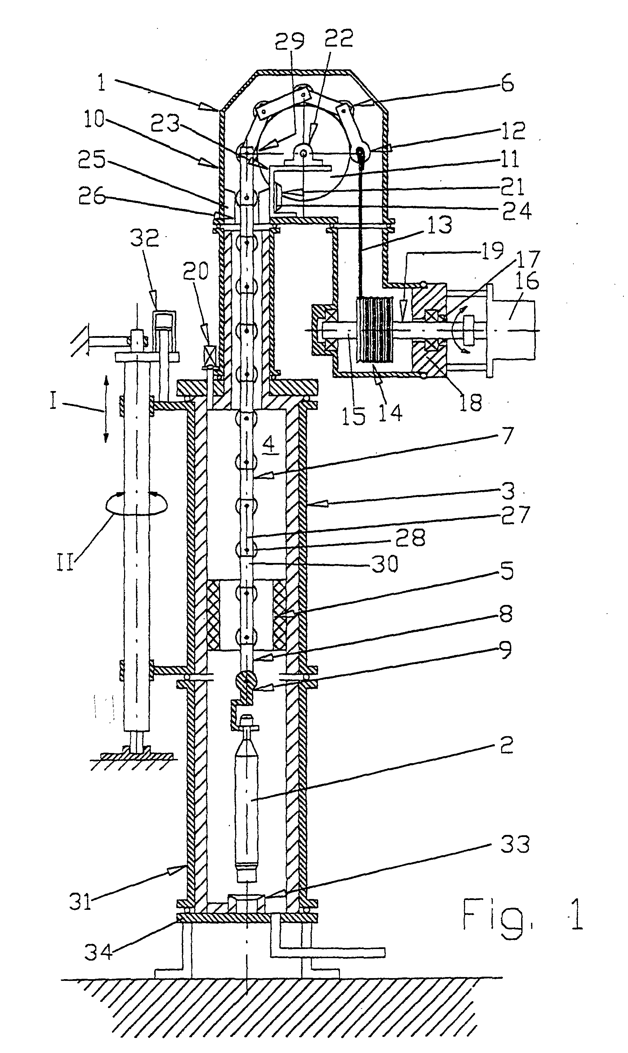

**Figur 1** zeigt eine erfindungsgemäße Vorrichtung 1 zum Sintern eines porösen Formkörpers 2 in einer geschnittenen Seitenansicht. Wesentlicher Bestandteil der Vorrichtung 1 ist eine gasdichte Kammer 3, in deren Innenraum 4 der Formkörper 2 einer Erhitzungszone 5 kontinuierlich vertikal zuführbar ist. Hierzu dient ein Hubmittel 6 mit einer Gliederkette 7, deren unteres Ende 8 mit einer Aufnahme 9 für den Formkörper 2 ausgestattet ist. Im Bereich eines Oberkessels 10 der Kammer 3 erfährt die Gliederkette 7 mittels eines Umlenkrades 11 eine Richtungsänderung, wobei ein dem Formkörper 2 abgewandtes, freies Ende 12 der Gliederkette 7 mit einem Zugseil 13 versehen ist. Dieses Zugseil 13 kann problemlos auf eine als Aufwickelspule 14 ausgeführte Wickeleinrichtung aufgewickelt werden und ermöglicht so die gewünschte Hubbewegung des Formkörpers 2. Die Aufwickelspule 14 ist einer Antriebswelle 15 angeflanscht, die mit einem außerhalb der Kammer 3 angeordneten Antrieb 16 unmittelbar verbunden ist. Zur Abdichtung der Antriebswelle 15 gegenüber dem Innenraum 4 der Kammer 3 ist eine mit einer Dichtung 17 versehene Durchführung 18 vorgesehen. Im Gegensatz zu einer nach dem Stand der Technik üblichen axial verschiebbaren Säule ermöglicht die ausschließlich drehbeweglich ausgeführte Antriebswelle 15 eine einfache Abdichtung des Innenraumes 4 der Kammer 3 gegenüber der Umgebung. Ablagerungen auf der Oberfläche des in den Innenraum 4 hineinreichenden Abschnittes 19 der Antriebswelle 15 führen daher nicht zu Undichtigkeiten, da der Abschnitt 19 nicht in die Dichtung 17 gelangen kann. Weiterhin ermöglicht die räumliche Trennung der mittels optischer Temperaturmesseinrichtung 20 kontrollierbaren Erhitzungszone 5 einerseits und der Aufwickelspule 14 andererseits eine vergleichsweise einfache Reduzierung der auftretenden Temperaturen, durch die eine erhöhte Prozeßsicherheit erreicht wird.

Die Vorrichtung 1 ist weiterhin mit einer Kraftmesseinrichtung 21 ausgestattet, durch die eine Überlastung der Gliederkette 7 erfasst und so eine Beschädigung der Vorrichtung 1 oder des Formkörpers 2 vermieden wird. Das Umlenkrad 11 ist hierzu mit einer Lagerung 22 an einer als Biegebalken ausgeführten Halterung 23 fixiert, die ihrerseits mit einem Dehnungsmessstreifen 24 versehen ist. So wird beispielsweise auch das Erreichen einer maximalen Hubhöhe, bei der die Aufnahme 9 des Formkörpers 2 gegen einen Anschlag 25 anstößt, erkannt und so der Antrieb 16 rechtzeitig abgeschaltet. Der Anschlag 25 ist zugleich auch mit einer Führung 26 für die Gliederkette 7 versehen, die eine Abweichung der im übrigen frei hängenden Gliederkette 7 quer zu der vertikalen Zugrichtung verhindert, so daß eine gewünschte seitliche Position des Formkörpers 2, insbesondere im Bereich der Erhitzungszone 5 eingehalten wird. Zur Reduzierung des Reibungswiderstandes der Gliederkette 7 beim Hubvorgang, sind deren einzelne Glieder 27 mit Rollen 28 ausgestattet, die auf einer Umlenkfläche 29 des Umlenkrades 11 abrollen können. Dabei tritt der Durchmesser der Rollen 28 im Verhältnis zu der Höhe der Stege 30 der Glieder 27 derart hervor, daß ein Kontakt zwischen den Stegen 30 und der Umlenkfläche 29 des Umlenkrades 11 ausgeschlossen ist und dadurch schädigende Biegekräfte auf die Stege 30 verhindert werden.

In der dargestellten betriebsbereiten Position hängt der Formkörper 2 bereits frei an der Aufnahme 9 der Gliederkette 7 in Höhe eines Unterkessels 31. Vor Beginn des Sinterprozesses ist es zunächst erforderlich, den Oberkessel 10 mittels einer hydraulischen Hebevorrichtung 32 anzuheben (Pfeil 1) und seitlich zu verschwenken (Pfeil II), um so den Formkörper 2 mittels eines nicht dargestellten Hebewerkzeuges in einen Aufnahmering 33 des Bodenflansches 34 abzusetzen. Anschließend wird der Oberkessel 10 über den Formkörper 2 geschwenkt (jedoch nicht abgesenkt) und die Gliederkette 7 so abgelassen, daß der Formkörper 2 mit der Aufnahme 9 manuell verbunden werden kann. Sodann wird der Formkörper 2 soweit angehoben, daß dieser auch bei dem folgenden Absenken des Oberkessels 10 auf den Unterkessel 31 nicht erneut auf dem Aufnahmering 33 aufsetzt. Mittels einer nicht dargestellten Vakuumpumpe wird der Innenraum 4 der Kammer 3 anschließend evakuiert, so daß der eigentliche Sinterprozeß beginnen kann.

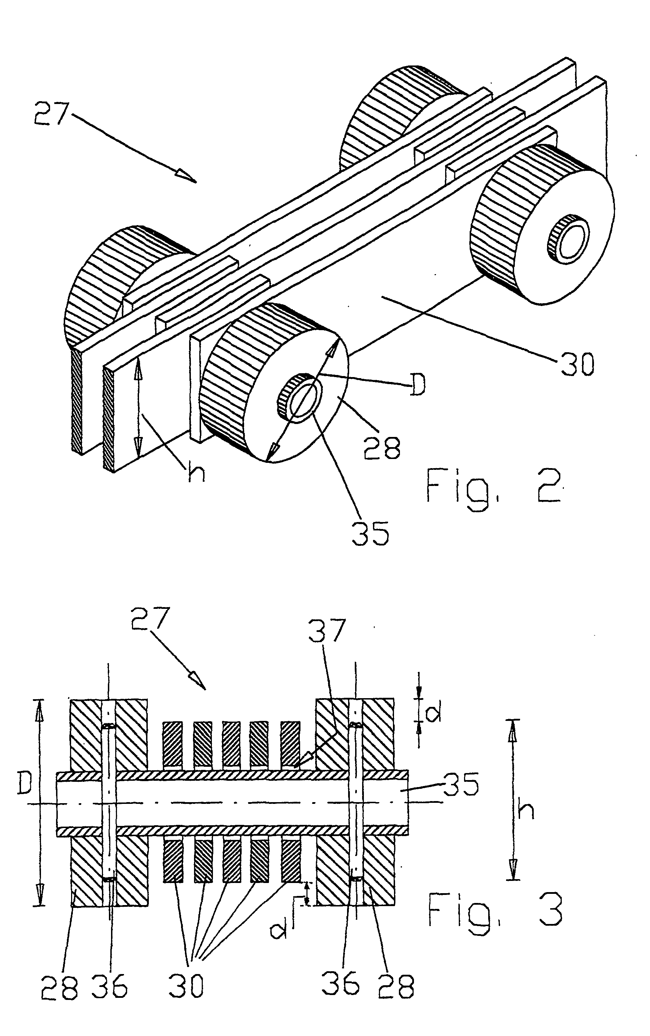

Der konstruktive Aufbau der Gliederkette 7 wird anhand einer perspektivischen Darstellung in **Figur 2** näher erläutert. Diese zeigt einen Ausschnitt der Gliederkette 7 mit den paarweise auf einer gemeinsamen Achse 35 angeordneten Rollen 28, welche mehrere parallele, versetzt (verschachtelt) angeordnete Stege 30 einschließen. Aufgrund der hohen beim Sinterprozeß erforderlichen Temperaturen sind die Bauelemente der Gliederkette 7 aus einem zugfesten und zugleich temperaturbeständigen Werkstoff hergestellt, wozu sich insbesondere kohlefaserverstärkte Graphitwerkstoffe eignen. Um einer Schädigung der Stege 30 durch eine unzulässige Biegespannung entgegenzutreten, ist der Durchmesser D der Rollen 28 im Verhältnis zur Höhe h der Stege 30 derart bemessen, daß eine Berührung der Stege 30 mit der Umlenkfläche 29 des in Figur 1 gezeigten Umlenkrades 11 ausgeschlossen ist.

Diese Differenz d zwischen dem Durchmesser D der Rollen 28 und der Höhe h der Stege 30 wird ergänzend auch in **Figur 3** verdeutlicht. Zu erkennen ist die gegenüber den Stegen 30 hervorspringende Geometrie der Rollen 28, die auf der gemeinsamen Achse 35 jeweils mittels eines Stiftes 36 fixiert sind. Die Stege 30 weisen an den Enden jeweils eine Durchbrechung 37 auf, durch welche die Achse 35 drehbeweglich hindurchgeführt ist. Die Stege 30 können abweichend von der dargestellten Ausführungsform auch eine unterschiedliche Materialstärke aufweisen, um so die abwechselnd unterschiedliche Anzahl der Stege 30 eines Gliedes 27 und die dadurch unterschiedliche maximale. Zugstärke auszugleichen. Die einzelnen durch die Achse 35 miteinander verbundenen Glieder 27 weisen bei der gezeigten konstruktiven Gestaltung als Freiheitsgrad lediglich die Schwenkbarkeit um die Achse 35 auf, so daß eine unerwünschte Rotation oder Pendeln des in Figur 1 gezeigten, frei hängenden Formkörpers 2 um seine Längsachse weitgehend ausgeschlossen ist.

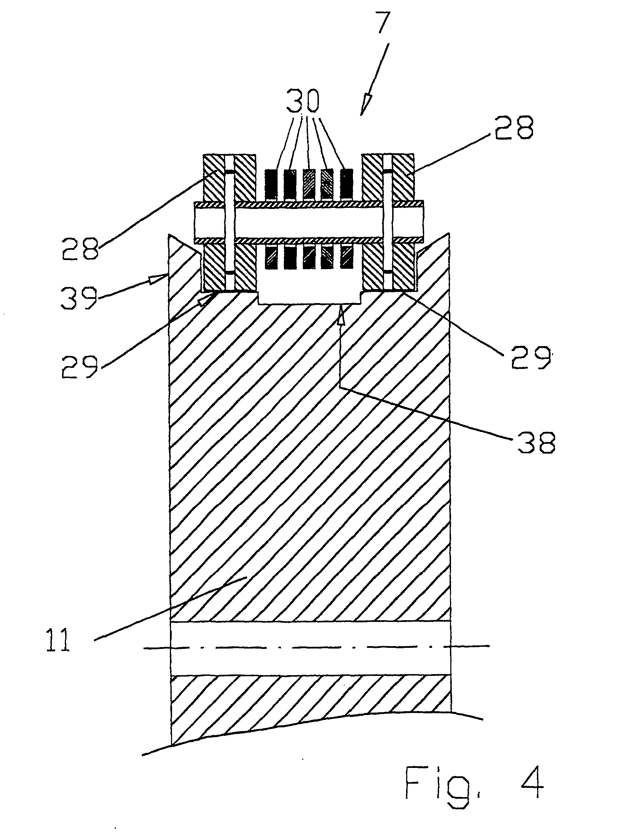

**Figur 4** zeigt das in Figur 1 gezeigte Umlenkrad 11 in einer in Achsebene geschnittenen Darstellung. Zu erkennen ist eine am Umfang mittig angeordnete und als umlaufende Nut ausgeführte Ausnehmung 38, der sich beidseitig jeweils die als Auflagefläche ausgeführte Umlenkfläche 29 mit ihren Borden 39 anschließt. Auf den Umlenkflächen 29 liegen die Rollen 28 der Gliederkette 7 auf, so daß eine reibungsarme Hubbewegung der Gliederkette 7 erreicht wird. Dabei verhindern die Borden 39 das seitliche Abgleiten der Gliederkette 7 von dem Umlenkrad 11. Eine Berührung zwischen den Stegen 30 und dem Umlenkrad 11 und eine dadurch verursachte unzulässige Biegebeanspruchung wird dabei durch die Ausnehmung 38 vermieden.

Mit einer entsprechenden Ausgestaltung der Ausnehmung ist es ohne weiteres auch möglich, den Durchmesser der Rollen abweichend von der dargestellten Ausführung übereinstimmend mit der Höhe der Stege vorzusehen.

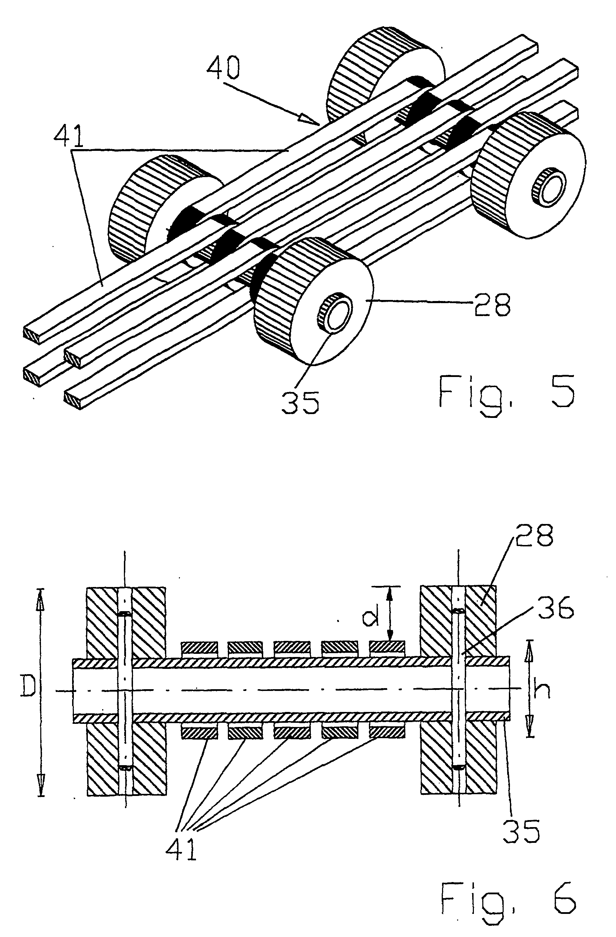

Demgegenüber ist in **Figur 5** eine abgewandelte Ausgestaltung eines Abschnittes einer Gliederkette, die als Ösenkette 40 ausgebildet ist, gezeigt, die unter Bezugnahme auf die Figur 6 näher dargestellt wird. Die Ösenkette 40 umfasst hierbei Ovalösen 41, die aus Rohrabschnitten gefertigt sind. Diese erlauben dadurch neben einer einfachen Herstellung auch eine optimale Anpassung an die geforderte Zugfestigkeit der Ösenkette 40. Zudem sind die aus einem kohlefaserverstärkten Graphitwerkstoff hergestellten Ovalösen 41 leichtgängig miteinander verbunden, wobei die Rollen 28 aus Graphit auf die Achsen 35 aufgepresst und mit Stiften 36 fixiert sind. Für die geometrischen Abmessungen der Ovalösen 41 im Verhältnis zu den Rollen 28 gelten übereinstimmend die anhand der Figuren 2 bis 4 erläuterten Grundsätze. Die Rollen 28 weisen dabei, wie dies insbesondere in Figur 6 erkennbar ist, einen gegenüber den Ovalösen 41 hervortretenden Durchmesser D auf, während die Höhe h der Ovalösen 41 reduziert ist. Die versetzte Anordnung der Ovalösen 41 ermöglicht eine in sich formstabile Gestaltung der als Ösenkette 40 ausgebildeten Gliederkette, deren Breite im wesentlichen frei wählbar ist.

Die Erfindung ist nicht auf die in der Zeichnung dargestellten Ausführungsbeispiele beschränkt. So kann eine einzelne Rolle außenseitig von jeweils einem Steg eingeschlossen sein, so daß ein hierzu als Kettenrad ausgeführtes Umlenkrad mit seinen Zähnen in die Freiräume zwischen den aufeinanderfolgenden Rollen eingreift. Dabei wird zugleich ein seitliches Abgleiten und auch ein möglicher Schlupf zwischen Umlenkrad und Gliederkette vermieden.

## Patentansprüche

1. Vorrichtung zum Sintern eines Formkörpers, insbesondere aus Siliciumdioxid-Soot in einer gasdichten Kammer, wobei die Vorrichtung zur vertikalen Zuführung des Formkörpers in eine Erhitzungszone mit einem in einen Innenraum der Kammer durch eine Durchführung hineinreichenden Hubmittel ausgestattet ist, welches durch einen außerhalb der Kammer angeordneten Antrieb bewegbar ist, **dadurch gekennzeichnet, daß** das Hubmittel (6) eine durch die Durchführung (18) in den Innenraum (4) der Kammer (3) hineinreichende und mit dem Antrieb (16) verbundene Antriebswelle (15) aufweist.

2. Vorrichtung nach Anspruch 1, **dadurch gekennzeichnet, daß** das Hubmittel (6) im Bereich der Erhitzungszone (5) eine aus einzelnen Gliedern (27) zusammengesetzte Gliederkette (7, 40) hat.

3. Vorrichtung nach den Anspruch 2, **dadurch gekennzeichnet, daß** die Gliederkette (7, 40) an einer Umlenkfläche (29) aus der vertikalen Zugrichtung umlenkbar ist.

4. Vorrichtung nach den Ansprüchen 2 oder 3, **dadurch gekennzeichnet, daß** die Glieder (27) der Gliederkette (7) derart miteinander verbunden sind, daß eine Drehbeweglichkeit um die Achse der Haupterstreckung der Gliederkette (7) im wesentlichen ausgeschlossen ist.

5. Vorrichtung nach zumindest einem der Ansprüche 2 bis 4, **dadurch gekennzeichnet, daß** die Glieder (27) der Gliederkette (7, 40) jeweils einen Steg (30) oder Ovalösen (41) aufweisen, wobei die Stege (30) oder Ovalösen (41) durch eine Achse (35) schwenkbar verbunden sind.

6. Vorrichtung nach zumindest einem der Ansprüche 2 bis 5, **dadurch gekennzeichnet, daß** die Gliederkette (7, 40) einzelne bei der Umlenkung jeweils auf der Umlenkfläche (29) aufliegende Rollen (28) aufweist.

7. Vorrichtung nach den Ansprüchen 5 oder 6, **dadurch gekennzeichnet, daß** die Stege (30) oder Ovalösen (41) in ihren äußeren Abmessungen (Höhe h) gegenüber dem Durchmesser (D) der Rollen (28) zurückgesetzt ist.

8. Vorrichtung nach zumindest einem der Ansprüche 5 bis 7, **dadurch gekennzeichnet, daß** die Umlenkfläche (29) eine für die Stege (30) oder Ovalösen (41) bestimmte Ausnehmung (38) aufweist.

9. Vorrichtung nach zumindest einem der vorangehenden Ansprüche, **dadurch gekennzeichnet, daß** die Umlenkfläche (29) an einem Umlenkrad (11) angeordnet ist.

10. Vorrichtung nach Anspruch 9, **dadurch gekennzeichnet, daß** das Umlenkrad (11) ein in die Rollen (28) der Gliederkette (7, 40) formschlüssig eingreifendes Kettenrad hat.

11. Vorrichtung nach zumindest einem der vorangehenden Ansprüche, **dadurch gekennzeichnet, daß** das Umlenkrad (11) mittels der Antriebswelle (15) antreibbar ist.

12. Vorrichtung nach zumindest einem der vorangehenden Ansprüche, **dadurch gekennzeichnet, daß** die Gliederkette (7, 40) durch ein Zugseil (13) mit einer mittels der Antriebswelle (15) antreibbaren Aufwicketspule (14) verbunden ist.

13. Vorrichtung nach zumindest einem der vorangehenden Ansprüche, **dadurch gekennzeichnet, daß** die Glieder (27) der Gliederkette (7, 40) aus einem zugfesten und temperaturbeständigen Werkstoff hergestellt sind.

14. Vorrichtung nach zumindest einem der vorangehenden Ansprüche, **dadurch gekennzeichnet, daß** die Glieder (27) aus einem kohlefaserverstärkten Graphit-Werkstoff hergestellt sind.

15. Vorrichtung nach zumindest einem der vorangehenden Ansprüche, **dadurch gekennzeichnet, daß** eine Kraftmesseinrichtung (21) zur Bestimmung einer auf das Hubmittell (6) wirkenden Kraft vorgesehen ist.

16. Vorrichtung nach Anspruch 15, **dadurch gekennzeichnet, daß** die Kraftmesseinrichtung (21) einen zur Bestimmung der auf die Umlenkfläche (29) wirkenden Kraft bestimmten Dehnungsmessstreifen (24) aufweist.

17. Vorrichtung nach zumindest einem der vorangehenden Ansprüche, **dadurch gekennzeichnet, daß** die Vorrichtung (1) eine Führung (26) für die Gliederkette (7, 40) hat, durch die eine Abweichung quer zur Zugrichtung der Gliederkette (7, 40) ausgeschlossen ist.

18. Vorrichtung nach zumindest einem der vorangehenden Ansprüche, **dadurch gekennzeichnet, daß** die Vorrichtung (1) einen Anschlag (25) zur Begrenzung der vertikalen Hubbewegung hat.

## Claims

1. A device for sintering a mold body, especially of silica soot, in a gas-tight chamber, said device for vertical feeding of the mold body into a heating zone being equipped with a lifting means which extends into an interior of said chamber through a passage, such lifting means being movable by a drive arranged outside of said chamber, **characterized in that** the lifting means (6) comprises a drive shaft (15) extending through said passage (18) into the interior (4) of said chamber (3) which is connected to the drive (16).

2. The device according to claim 1, **characterized in that** the lifting means (6) in the area of the heating zone (5) has a link chain (7, 40) composed of individual links (27).

3. The device according to claim 2, **characterized in that** the link chain (7, 40) can be deviated from the vertical pulling direction at a deviation surface (29).

4. The device according to claims 2 or 3, **characterized in that** the links (27) of said link chain (7) are interconnected so that a rotation around the axis of the main extension of the link chain (7) is substantially excluded.

5. The device according to at least one of claims 2 to 4, **characterized in that** each of the links (27) of said link chain (7, 40) comprises a web (30) or oval eyelets (41), said webs (30) or oval eyelets (41) being pivotably connected by an axis (35).

6. The device according to at least one of claims 2 to 5, **characterized in that** the link chain (7, 40) is provided with individual rollers (28) being supported on the deviation surface (29) during deviation.

7. The device according to claims 5 or 6, **characterized in that** said webs (30) or oval eyelets (51) are reduced in their outer dimensions (height h) in comparison with the diameter (D) of the rollers (28).

8. The device according to any one of claims 5 to 7, **characterized in that** said deviation surface (29) comprises a recess (38) intended for said webs (30) or oval eyelets (41).

9. The device according to at least one of the preceding claims, **characterized**
**in that** the deviation surface (29) is arranged on a deviation wheel (11).

10. The device according to claim 9, **characterized in that** the deviation wheel (11) has a chain wheel which positively engages into the rollers (28) of the link chain (7, 40).

11. The device according to at least one of the preceding claims, **characterized in that** the deviation wheel (11) is drivable by means of said drive shaft (15).

12. The device according to at least one of the preceding claims, **characterized in that** the link chain (7, 40) is connected by a traction rope (13) to a winding reel (14) that is drivable by means of the drive shaft (15).

13. The device according to at least one of the preceding claims, **characterized in that** the links (27) of the link chain (7, 40) are made from a material that is resistant to tensile stress and temperature.

14. The device according to at least one of the preceding claims, **characterized in that** the links (27) are made from a carbon fiber-reinforced graphite material.

15. The device according to at least one of the preceding claims, **characterized in that** a force measuring device (21) is provided for determining a force acting on the lifting member (6).

16. The device according to claim 15, **characterized in that** the force measuring device (21) comprises a strain control strip (24) intended for determining the force acting on said deviation surface (29).

17. The device according to at least one of the preceding claims, **characterized in that** the device (1) is equipped with a guiding appliance (26) for the link chain (7, 40) for excluding deviation in a direction transverse to the pulling direction of the link chain (7, 40).

18. The device according to at least one of the preceding claims, **characterized in that** the device (1) has a catch (25) for limiting the vertical lifting movement.

## Revendications

1. Dispositif de frittage d'un corps moulé en particulier d'une suie de dioxyde de silicium dans une chambre étanche au gaz, afin d'introduire verticalement le corps moulé dans une zone de chauffage, le dispositif étant muni d'un moyen de levage s'engageant dans l'intérieur de l'enceinte par un passage, lequel moyen est mobile par un entraînement disposé à l'extérieur de la chambre, **caractérisé en ce que** le moyen de levage (6) présente un arbre d'entrainement (15) relié à l'entraînement (16) et s'engageant à l'intérieur (4) de la chambre (3) par le passage (18).

2. Dispositif selon la revendication 1, **caractérisé en ce que** le moyen de levage (6) présente à proximité de la zone de chauffage (5) une chaîne (7, 40) se composant de maillons individuels (27).

3. Dispositifs selon la revendication 2, **caractérisé en ce que** la chaîne à maillons (7, 40) peut être déviée de sa direction de traction sur une surface de renvoi (29).

4. Dispositif selon les revendications 2 ou 3, **caractérisé en ce que** les organes (27) de la chaîne à maillons (7) sont reliés entre eux de telle sorte qu'une mobilité en rotation autour de l'axe de l'extension principale de la chaîne à maillons (7) est sensiblement exclue.

5. Dispositif selon au moins l'une des revendications 2 à 4, **caractérisé en ce que** les organes (27) de la chaîne à maillons (7, 40) présentent un étançon (30) ou oeillets ovales (41), les étançons (30) ou oeillets ovales (41) étant reliés de manière pivotante par un axe (35).

6. Dispositif selon au moins l'une des revendications 2 à 5, **caractérisé en ce que** la chaîne à maillons (7, 40) présentent des galets individuels (28) reposant respectivement lors du renvoi sur la surface de renvoi (29).

7. Dispositif selon l'une des revendications 5 ou 6, **caractérisé en ce que** les étançons (30) ou oeillets ovales (41) ont des dimensions externes (hauteur h) inférieures au diamètre (D) des galets (28).

8. Dispositif selon au moins l'une des revendications 5 à 7, **caractérisé en ce que** la surface de renvoi (29) présente un évidement (38) destiné aux étançons (30) ou oeillets ovales (41).

9. Dispositif selon au moins l'une des revendications précédentes, **caractérisé en ce que** la surface de renvoi (29) est disposée sur une poulie de renvoi (11).

10. Dispositif selon la revendication 9, **caractérisé en ce que** la poulie de renvoi (11) présente une poulie à chaînes s'engageant par crabotage dans les galets de la chaîne à maillons (7, 40).

11. Dispositif selon au moins l'une des revendications dépendantes, **caractérisé en ce que** la poulie de renvoie (11) peut être entraînée au moyen de l'arbre d'entraînement (15).

12. Dispositif selon au moins l'une des revendications dépendantes, **caractérisé en ce que** la chaîne à maillons (7, 40) est reliée par un câble de traction (13) à une poulie d'enroulement (14) pouvant être entraînée au moyen de l'arbre d'entraînement (15).

13. Dispositif selon au moins l'une des revendications dépendantes, **caractérisé en ce que** les maillons (27) de la chaîne à maillons (7, 40) sont fabriqués à partir d'un matériau résistant à la température et à la traction.

14. Dispositif selon au moins l'une des revendications dépendantes, **caractérisé en ce que** les maillons (27) sont fabriqués à partir d'un matériau graphite renforcé aux fibres de carbone.

15. Dispositif selon au moins l'une des revendications dépendantes, **caractérisé en ce qu'**un dispositif de mesure de force (21) est prévu pour la détermination d'une force agissant sur le moyen de levage (6).

16. Dispositif selon la revendication 15, **caractérisé en ce que** le dispositif de mesure de force (21) présente une bandelette de mesure d'allongement (24) destinée à la détermination de la force agissant sur la surface de renvoi (29).

17. Dispositif selon au moins l'une des revendications dépendantes, **caractérisé en ce que** le dispositif (1) présente un guide (26) pour la chaîne à maillons (7, 40), qui permet d'exclure un déport transversalement au sens de traction de la chaîne à maillons (7, 40).

18. Dispositif selon au moins l'une des revendications dépendantes, **caractérisé en ce que** le dispositif (1) présente une butée (25) pour limiter le mouvement de levage vertical.
